# EUROPEAN PATENT SPECIFICATION

(11) **EP 0 450 631 B1**
(45) Date of publication and mention of the grant of the patent: **14.02.1996**
(21) Application number: 91105370.0
(22) Date of filing: 05.04.1991
(51) Int. Cl.: H04H 9/00

(54) **Automatic commercial message recognition device**
Vorrichtung zur automatischen Erkennung von Werbungsinformation
Dispositif de reconnaissance automatique d'un message commercial

(30) Priority: 06.04.1990 JP 91445/90
(43) Date of publication of application: 09.10.1991
(73) Proprietor: KABUSHIKI KAISHA VIDEO RESEARCH, Chuo-ku, Tokyo (JP)
(72) Inventor: Itoh, Yosikazu, c/o Kabushiki Kaisha, Chuo-ku, Tokyo (JP); Ichige, Hidetoshi, c/o Kabushiki Kaisha, Chuo-ku, Tokyo (JP); Aoyama, Tadayuki, c/o Kabushiki Kaisha, Chuo-ku, Tokyo (JP)
(74) Representative: Lehn, Werner, Dipl.-Ing.

(56) References cited:
- EP-A- 0 210 609
- EP-A- 0 283 570
- US-A- 3 919 479
- US-A- 4 230 990

## Description

### BACKGROUND OF THE INVENTION

The present invention relates to a device for automatically recognize a commercial message (referred to as "CM" hereinafter) broadcast as requested.

CM is widely utilized in TV broadcasting as advertising medium and enterprises as sponsors for TV programs have been using large amount of money to prepare and broadcast CMs.

It has been known, however, that any TV broadcasting company includes a large number of employees and uses very complicated devices to realize a broadcasting. For these reasons, any program is not always broadcast as scheduled and any CM is not always actually broadcast in a time and with a content as requested by a sponsor, which is very serious problem for the sponcer.

In order to solve this problem, there is a business field in which it is checked whether or not a required broadcasting is actually performed.

In this business field, it is usual to check necessary items with using human eyes and ears. That is, watchers watch a plurality of TV monitors located within a service area of TV broadcasting each for a different channel while recording broadcasting programs by a corresponding number of video tape recorders to memorize contents of the broadcast programs which are collected subsequently to find any error.

This has drawbacks that the number of watchers is considerable and that, since such watchers are human being, there may be errors to occur in any way, resulting in reliability degraded.

US-A-4 230 990 shows a cue detector to identify when a program is broadcast. A cue signal may be placed in either a video or audio portion of the signal. The cue detector is synchronised to a vertical synchronising signal derived from the broadcast signal.

### SUMMARY OF THE INVENTION

The present invention is intended to solve these drawbacks of the conventional monitoring business and therefore an object of the present invention is to provide an automatic CM recognition device capable of automatically checking any error in broadcasting time and content of specific CM, with high reliability.

According to the present invention, there is provided an automatic CM recognition device as set out in claim 1.

It has been found by the inventors of this invention that, among signals contained in a CM program, i.e., audio signal and video signal, carrier frequency-of the audio signal is not modulated at a start or end of a CM broadcasting for a time interval of several hundreds milliseconds and the video signal is sharply changed considerably by a switching of a signal source during such interval. The present invention is based on a detection of such change of signal states to derive only the CM exactly by a video recorder while referencing the audio data with an audio data of a known and stored CM data.

In the present automatic CM recognition device, the audio data preparing portion produces audio data from a received audio signal in a TV broadcasting, the silence data preparing portion produces silence data from the audio signal contained in the TV program received, then image change detector portion detects a change of image on an image screen from a video signal of the TV program received, the control portion for determining a start or end of a CM when an output silence data of the silence data detecting portion indicates a silence state and the image change detector portion detects a change of image and the CM data referencing portion derives an audio data from a start or end of the CM and compares it with a preliminarily stored audio data of the CM.

### BRIEF DESCRIPTION OF THE DRAWUINGS

Fig. 1 shows a circuit construction of an embodiment of an automatic CM recognition device according to the present invention;
Fig. 2 shows an audio data preparing portion and a silence data detecting portion of the embodiment shown in Fig. 1;
Fig. 3 shows a circuit construction of an image change detecting portion of the embodiment shown in Fig. 1;
Fig. 4 shows a circuit construction of an image comparing/control circuit shown in Fig. 3;
Fig. 5 shows a construction of a timing portion shown in Fig. 1;
Fig. 6 illustrates an example of superimposition;
Fig. 7 shows a structure of DTMF signal; and
Fig. 8 shows a construction of a check system.

### DETAILED DESCRIPTION OF THE PREFERRED EMBODIMENTS

An embodiment of the present invention will be described with reference to the accompanying drawings.

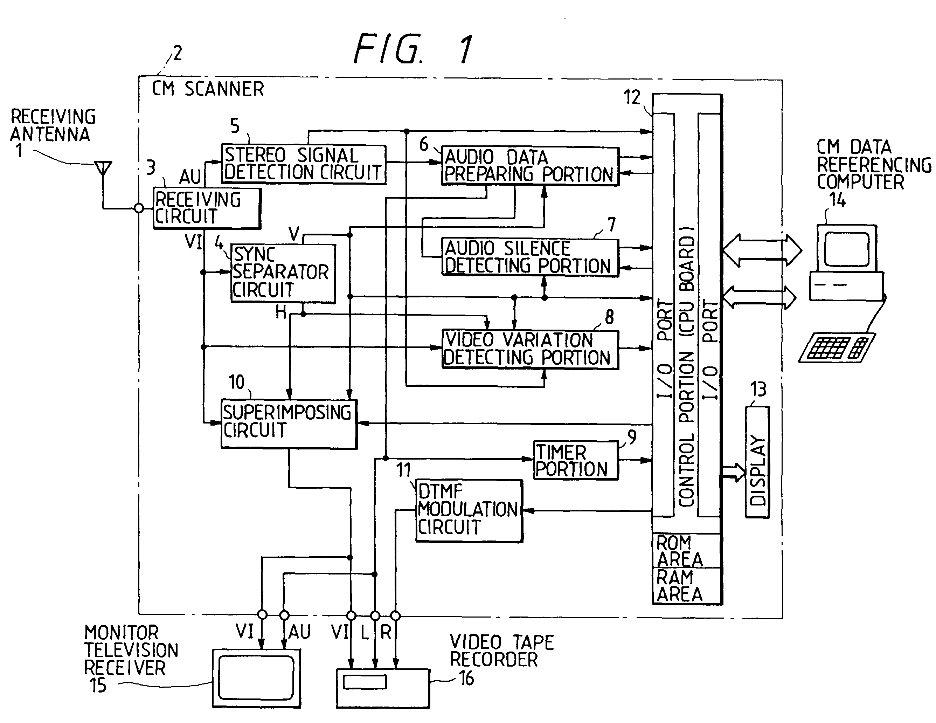

In Fig. 1 which shows a construction of an embodiment of an automatic CM recognition device according to the present invention, it is constituted mainly with a receiving antenna 1, a CM scanner 2, a CM data referencing computer 14, a monitor television receiver 15 and a video tape recorder 16. The CM scanner 2 serves to receive TV broadcasting, to detect a start and an end of a CM and output an audio signal contained in the CM as an audio data by digitizing the audio signal in synchronism with a vertical synchronizing signal. The CM data referencing computer 14 serves to derive the CM included in a period from the start to the end thereof detected by the CM scanner 2, compare an audio data received from the CM scanner 2 during the CM period with an audio data (master data) stored for the known CM and perform a record of a content thereof and a broadcasting time thereof. On the other hand, the video tape recorder 16 is used to manually check the CM when the latter can not be analysed by the computer 14 or to provide material for preparation of a new master data.

In Fig. 1, the CM scanner 2 comprises a receiver circuit 3, a sync separator circuit 4, a stereo signal detection circuit 5, an audio data preparing portion 6, an audio silence detection circuit 7, a video variation detecting portion 8, a timer portion 9, a superimposing circuit 10, a DTMF modulation circuit 11, a control portion (CPU board) 12 and a display 13. Details of constructions and operations of these components will be described.

### (1) Preparation of Audio Data and Silence Data

A broadcasting wave arrived at the receiving antenna 1 is passed to the receiving circuit 3 in which an audio signal AU and a composite, video signal VI in a desired channel are derived. The receiving circuit 3 may comprise a tuner circuit, an intermediate frequency circuit and a detection circuit as well known. The desire channel is fixed and the device shown in Fig. 1 is provided for each of such channels.

The video signal VI from the receiving circuit 3 is supplied to the sync separator circuit 4 from which a vertical synchronizing signal V and a horizontal synchronizing signal H are derived for use in other circuit components of this device.

The audio signal AU supplied from the receiving circuit 3 is supplied to the stereo signal detection circuit 5 in which it is determined whether or not it is a stereo broadcasting according to presence or absence of an identifier signal and, when it is a stereo broadcasting, it is signalled to the control portion 12, etc.

The audio signal passed through the stereo signal detection circuit 5 is supplied to the audio data preparing portion 6 in which a digitized audio data of, for example, 8 bits is produced by sampling it with a timing of the vertical synchronizing signal V supplied from the sync separation circuit 4. The digital audio data is fetched by the control portion 12 in response to a signal therefrom. The audio data is used to specify a content of the CM. The audio signal branched at the audio data preparing portion 6 is supplied to the audio silence detection portion 7 in which a silence data indicating silent state is produced. The silence data is used to detect the silent state which is one of important factors in detecting a start and an end of the CM.

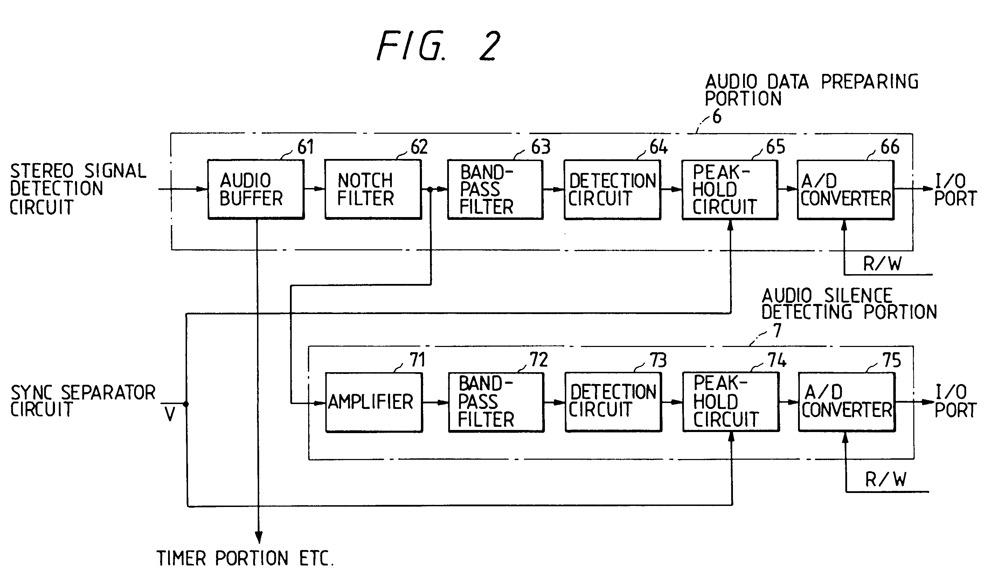

Fig. 2 shows a circuit construction of the audio data preparing portion and the audio silence detecting portion 7. The audio data preparing portion 6 comprises an audio buffer 61, a notch filter 62, a bans-pass filter 63, a detection circuit 64, a peak-hold circuit 65 and an A/D converter 66 and the audio silence detecting portion 7 comprises an amplifier 71, a band-pass filter 72, a dection circuit 73, a peak-hold circuit 74 and an A/D converter 75, the audio signal being supplied to the audio silence detecting portion 7 from an output of the notch filter 62 of the audio data preparing portion 6.

In operation, the audio signal supplied to the audio data preparing portion 6 is buffered by the audio buffer 61 and then a frequency of timecasting signal (440Hz, 880Hz) is removed therefrom by the notch filter 62 so that such time cast can not affect the recognition of the CM.

Then, a frequency component, for example, 100 Hz to 1000 Hz, of the audio signal passed through the notch filter 62 is derived from the band-pass filter 63. This fequency range is selected since it is enough in recognizing an identity of the CM from the audio signal and since a wider range may cause an erroneous determination to occur.

The audio signal after passed through the band-pass filter 63 is converted by a suitable time constant of the detection circuit 64 into a signal indicating a macro amplitude variation.

An output signal of the detection circuit 64 is sampled in the peak-hold circuit 65 at the timing of the vertical synchronizing signal V supplied from the sync separation circuit 4, converted by the subsequent A/D converter 66 into an audio data of, for example, 8 bits and fetched by the control portion 12 according to a read/write signal R/W supplied from the control portion 122 through an I/O port.

On the other hand, the audio silence detecting portion 7 has a similar circuit construction to that of the audio data preparing portion 6 and therefore its operation is also similar, except that the passband of the band-pass filter 72 is set to 100 Hz to 5000 Hz so that a silence state can be detected more precisely.

For Japanese TV broadcasting standard, 60 audio data and 60 silent data, each being 8 bits, are produced for a time period of 1 second and taken in the control portion 12.

### (2) Detection of Video Signal Variation

In Fig. 1, the video signal VI from the receiving circuit 3 is supplied to the video signal variation detecting portion 8 which detects an abrupt and considerable change in the video signal and provides a signal indicating the same to the control portion 12.

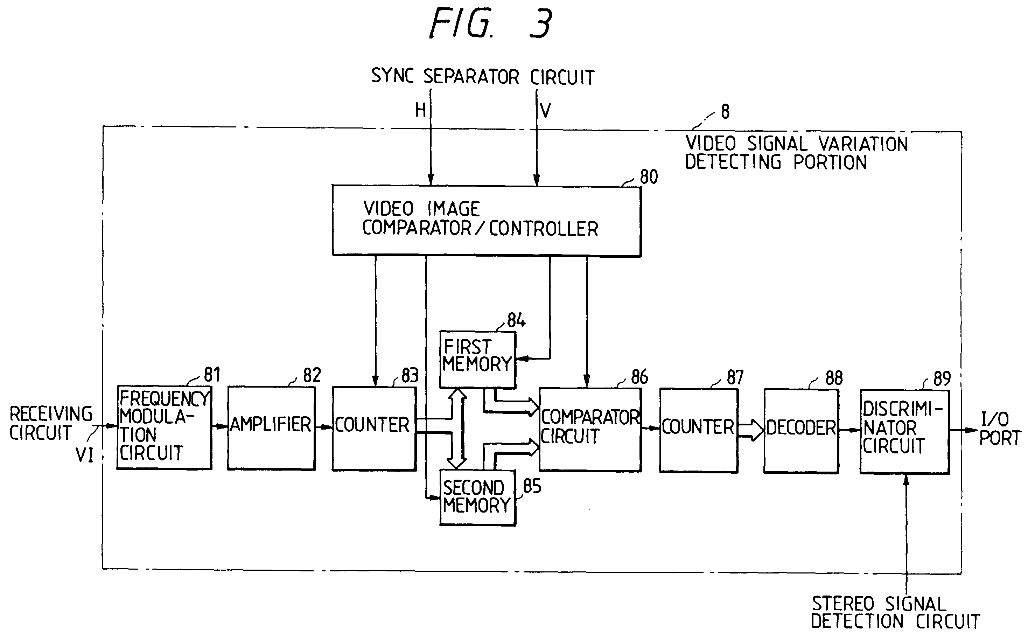

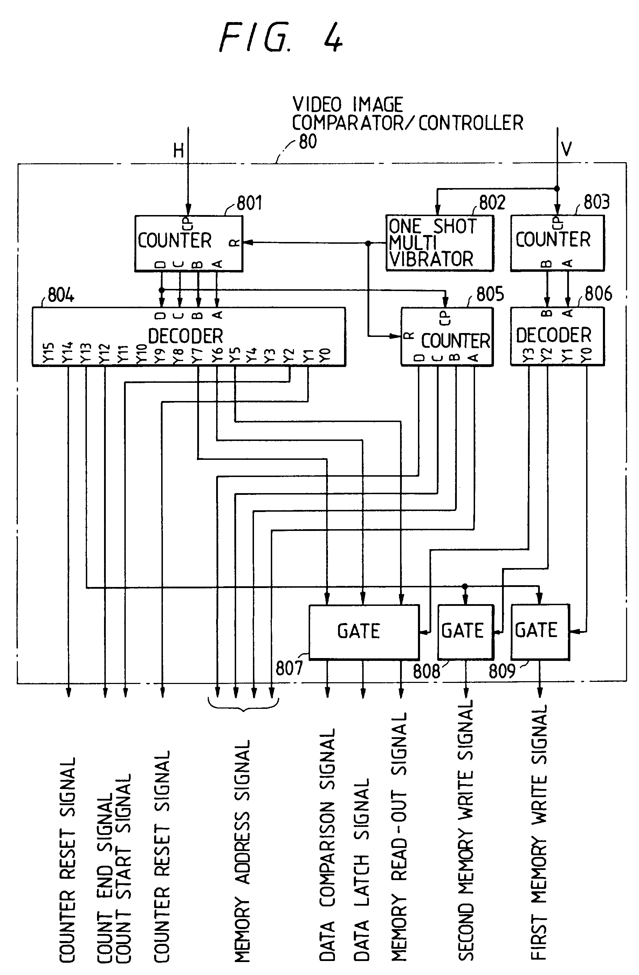

Fig. 3 shows an internal construction of the video signal variation detecting portion 8. The video signal variation detecting portion 8 comprises a frequency modulation circuit 81, an amplifier 82, a counter 83, a first memory 84, a second memory 85, a comparator 86, a counter 87, a decoder 88, a discriminator circuit 89 and a video image comparator/controller 80. The latter comparator/controller 80 is shown in Fig. 4 in detail.

In operation, the video signal VI supplied from the receiving circuit 3 is frequency-modulated by the frequency modulation circuit 81. This frequency modulation is used to make a wave height of video signal constant to thereby facilitate a wave number counting of video signal to be performed by the counter 83 so that any signal change can be reflected to a count value exactly.

Then, after the frequency-modulated video signal is amplified to a suitable level by the amplifier 82, its wave number is counted by the counter 83 for a unit predetermined time period and the count value is written in the first memory 84 or the second memory 85.

In this embodiment, one detection cycle is constituted with 2 frames of a video signal (1 frame corresponding to 1 image and being constituted with an odd number field and an even number field). The change of image is detected by assigning odd number field constituting a preceding half of one frame to a counting period and the even number field constituting a succeeding half of a next frame to a comparison period between counts of the former frame and the later frame. Each odd number field is divided by, for example, 16 (although the divisor in Fig. 4 is 16, it is not limited thereto) and the counting is performed for each of 16 periods. This is because, when the counting is performed for a time corresponding to a whole odd number field, there might be a case where a large change of image is cancelled out and can not be reflected to the count value.

Therefore, the counter 83 is reset at an end of each of the 16 periods and counts the number of waves fallen in a next period immediately succeeding the period. The count values of the respective 16 periods are written in a first address to 16th address of the first memory, respectively, in sequence and this is repeated for the odd number field of the next frame and the count values are written in 1st to 16th addresses of the second memory. respectively, in sequence.

Then, in the even number field of the second frame, the count values stored in the first memory 84 and the second memory 85 are readout from the first addresses thereof sequentially and compared sequentially with each other by the comparator circuit 86. Equality comparisons and non-equality comparisons are counted by the counter 87 and converted by the decoder 88 into signals indicative of the number of equalities and the number of non-equalities from which the discrimination circuit 89 determines existence or absence of image change. The determination provided by the discrimination circuit 89 is supplied to the control portion 12. For example, when there are 8 or more non-equalities among 16 comparisons, it is determined as existence of image change. Since stereo TV broadcasting is popular in Japan and therefore any CM tends to be broadcast in stereo mode, the stereo signal detection circuit 5 is provided so that a reference value in determining image change can be changed according to the broadcasting mode, monoral or stereo.

As shown in Fig. 4, in order to control the counting, the writing to and reading from the memories and the comparisons, a signal discriminating between odd number fields and even number fields of two successive frames is produced from the vertical synchronizing signal V by a 2-bit counter 803 and a decoder 806 and various control signals are produced within each of the 16 periods of 1 field from the horizontal synchronizing signal H by means of a 4-bit counter 801 and a decoder 804. Write and read signals and comparison signals are defined by periods to be given by gates 807 to 809. Memory address signals for the first and second memories 84 and 85 are produced from signals from the most significant bit D of the counter 801 through a 4-bit counter 805.

### (3) Detection of Start or End of CM

In Fig. 1, the control portion 12 monitors a silence data from the audio silence detecting portion 7 and determines as silent state when a data indicative of silent state persists for, for example, 250 ms.

When the silence data from the audio silence detecting portion 7 indicates a silent state and the video change detecting portion 8 detects a switching between images, it is determined as a start or end of a CM which is signalled to the CM data referencing computer 14.

### (4) Pick-up of CM and Reference of Audio Data

Upon receipt of detection signal of start or end of a CM from the CM scanner 2, an internal soft timer (not shown) of the CM data referencing pomputer 14 measures a CM time (with using the vertical synchronizing signal V as a reference) and, when the CM time measured is in the order of 10 seconds, 15 seconds, 30 seconds, 45 seconds or 60 seconds, it is decided that the CM is ended. The audio data produced by the audio data preparing portion is readout from the scanner 2 starting at the end point of CM in reverse direction to the start point thereof.

The audio data thus readout is referenced with respect to a master data which includes audio data of the known CMs preliminarily stored in a magnetic disk, etc., and, when there is any equality found between the readout data and the master data, a name of sponcer thereof, a name of product and a broadcasting time, etc., are recorded and concurrently outputted to a monitor of the CM data referencing computer 14. Where there is no equality between the readout data and the master data, a message indicating the fact is recorded and outputted for subsequent use in preparing a new master data.

### (5) Adjustment of Time

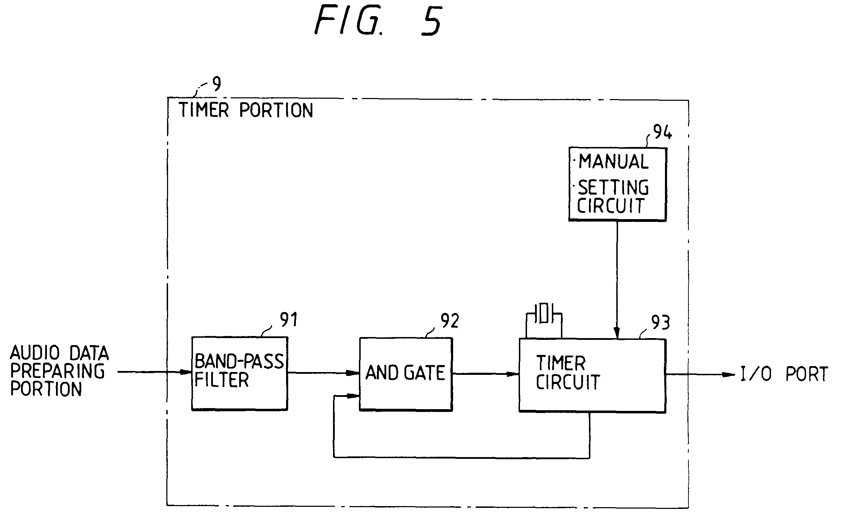

Fig. 5 shows an internal construction of the timer portion 9 shown in Fig. 1.

The timer portion 9 is constituted mainly with a timer circuit 93 comprising a qualtz oscillator. Further, the timer portion 9 includes a manual setting circuit 94 for arbitrarily setting time (month, day, hour, minute and second), a band-pass filter 91 and an AND gate 92.

The audio signal from the audio buffer 61 of the audio data preparing portion 6 shown in Fig. 2 is supplied to the band-pass filter 91 by which the timecast signal (880 Hz) contained in the audio signal is derived. The timecast signal is ANDed with an adjusting signal supplied from the timer circuit 93 by the AND gate 92 to automatically adjust the timer circuit. The adjusting signal from the timer circuit 93 may be a signal which, when the timer circuit 93 is to be corrected by a timecast signal of noon, is active for a time period from a time instance of AM 11 o'clock, 59 minute, 58 second to PM 0 o'clock, 0 minute, 2 second, taking an error of the timer circuit 93 into consideration.

### (6) Preparation of Monitor Signal and Recording Signal

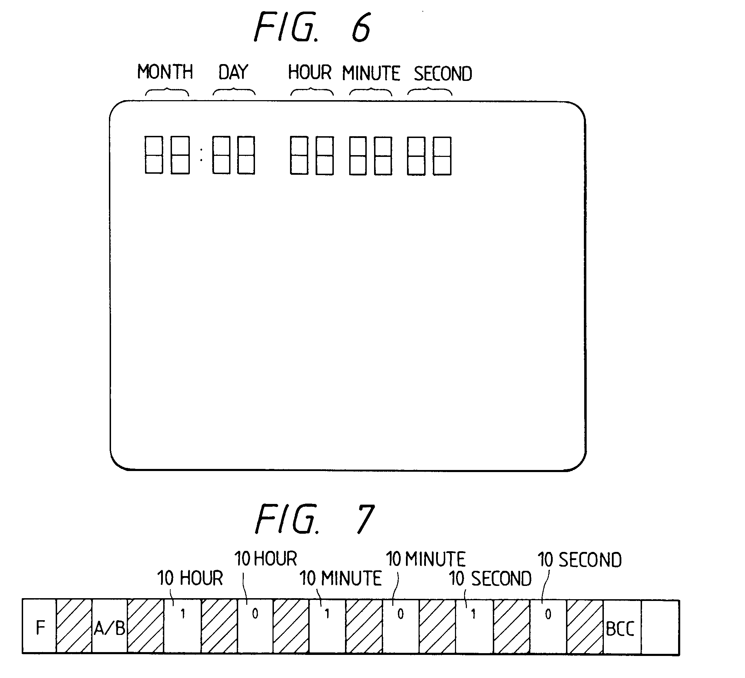

In Fig. 1, the video signal VI from the receiving circuit 3 is also supplied to the superimpose circuit 10 in which a character image including time indication supplied from the control portion 12 is superimposed on the video signal VI and an output of the superimpose circuit 10 is displayed on the monitor TV 15 and simultaneously recorded in the video tape recorder 16. Fig. 6 illustrates an example of time to be superimposed on a video image. With such superposition of time, etc., it is possible to identify a specific date and time to recognize a recorded content manually subsequently.

On the other hand, the audio signal from the audio signal preparing portion 6 is recorded on, for example, an L channel of the audio track of the video tape recorder 16 on a R channel of which a tone signal of a time data produced by the DTMF modulation circuit 11 under control of the control portion 12 is recorded. Fig. 7 shows an example of a construction of the DTFM signal. In Fig. 7, it includes a header portion F followed by an identifier signal A or B indicating stereo mode or monoral mode and a time information. Hatched portions in Fig. 7 indicate pose periods.

### (7) Manual Check

The automatic CM recognition device shown in Fig. 1 is satisfactory. However, it is impossible to recognize a new CM which has not been included in the master data with the device in Fig. 1. In order to solve this problem, it is to check the CM manually.

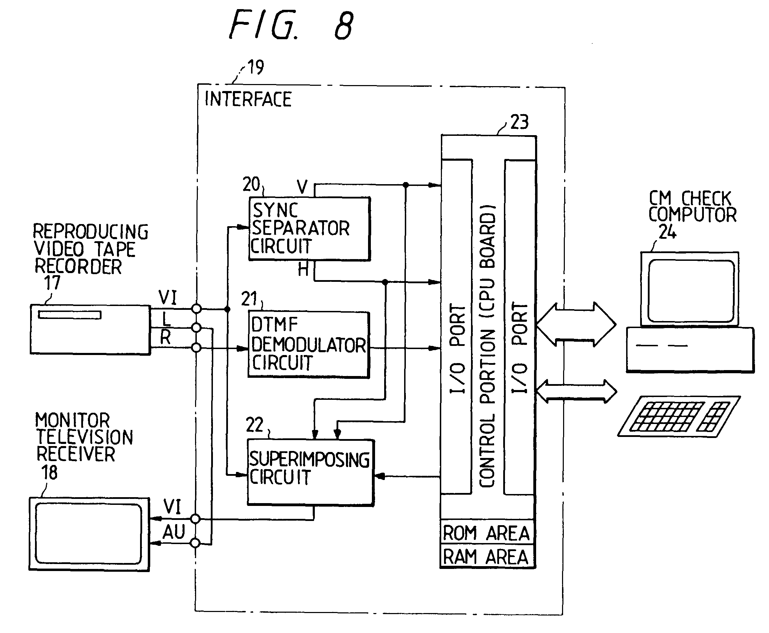

Fig. 8 shows a system construction available for such manual check. This system is provided separately from the automatic CM recognition device shown in Fig. 1 since the latter can not be used for this purpose because it is used continuously during a TV broadcasting period.

In Fig. 8, a recorded video tape by the recording video tape recorder 16 in Fig. 1 is set in a reproducing video tape recorder 17 so that it can be reproduced. In this case, it is not always necessary to reproduce all of the recorded information since it is enogh to check portions of a CM which can not be checked based on a referencing performed by the CM data referencing computer 14 shown in Fig. 1.

From a video signal VI from the reproducing video tape recorder 17, a vertical synchronizing signal V and a horizontal synchronizing signal H are derived by a sync separator circuit 20 and supplied to a control portion 23, etc. On the other hand, a DTFM signal indicating time data recorded on the R channel of the audio track is converted by a DTFM demodulator circuit 21 into a time data which is supplied to the control portion 23.

The control portion 23 reads from a CM checking computer 24 the referencing result corresponding to the time data given by the DTFM demodulator circuit 21, inserts an instruction message into the video signal VI from the reproducing video tape recorder 17 through a superimpose circuit 22 and displays it on a monitor TV 18. The characters indicating time inserted at the recording is also displayed and the audio signal AU is outputted as it is.

When a CM is a new CM whose master data does not exist, a name of a sponsor, a name of product, etc., of the new CM are included in a CM recognition result with respect to an audio data of the new CM by operating a key board, etc., of the CM check computer 24 to register it as a new master data.

As described hereinbefore, according to the automatic CM recognition device of the present invention, a CM can be automatically derived from a signal received and recognized by comparing it with a preliminarily stored master data. Therefore, it is possible to substantially reduce man power necessary to perform such CM recognition work and also to improve the reliability of recognition.

## Claims

1. An automatic commercial message (CM) recognition device for checking a commercial message program in a TV broadcasting signal that has an audio signal having a fixed timing with respect to a video signal thereof, comprising:
first means (6,7) responsive to the TV broadcasting signal for detecting a silence state of the audio signal in the TV broadcasting signal at a start time or at an end time of the commercial message program, said first means including an audio data preparing portion (6) responsive to the audio signal and a vertical synchronising signal of the video signal for producing audio data of the TV signal, and a silence data preparing portion (7) responsive to said audio data and the vertical synchronising signal for producing silence data from the audio signal;
second means (8) for detecting a significant change in image content from one frame to another, in the video signal of the TV broadcasting signal;
third means (89) responsive to outputs of said first means and said second means to derive only the commercial message program;
fourth means (5) for producing audio data of the TV broadcasting signal by sampling the audio signal with a timing of the vertical synchronising signal; and
fifth means (2, 14) for deciding an existence of a commercial message program broadcasting in a time period between a first simultaneous occurrence of a silent state and a significant change in image content and a second simultaneous occurrence of a silent state and a significant change in image content, when this time period equals a time period preset as a commercial message program broadcasting time, and for comparing the commercial message program derived by said third means with preliminarily stored commercial message data to recognise the commercial message program.

2. The automatic commercial message recognition device claimed in Claim 1, wherein said first means includes an audio data preparing portion responsive to an audio signal and a vertical and horizontal synchronising signals of a video signal contained in a TV signal received for producing audio data ofthe TV signal; and
a silence data preparing portion responsive to said audio data and the vertical synchronizing signal for producing silence data from the audio signal contained in the TV program received.

3. The automatic commercial message recognition device claimed in claim 2, wherein said second means includes an image change detector portion responsive to the video signal, the vertical synchronizing signal and the horizontal synchronizing signal for detecting a change of image on an image screen from the video signal.

4. The automatic commercial message recognition device claimed in claim 2, wherein said fifth means includes a control portion for determining a start or end of a CM when an output of said silence data detecting portion indicates a silence state and said image change detector portion detects a change of image; and
a commercial message data referencing portion cooperating with said control portion for comparing the audio data in a time period from a start to an end of the commercial message with preliminarily stored audio data of the commercial message to determine a match between the audio data and the preliminary stored audio data.

5. The automatic commercial message recognition device claimed in claim 4, further comprising manual check means for checking a commercial message and/or preparing master data for the commercial message when said commercial message data referencing portion fails to determine the match.

## Patentansprüche

1. Automatische Erkennungseinrichtung für kommerzielle Nachrichten (CM), zur Überprüfung eines Programms einer kommerziellen Nachricht in einem TV-Aussendesignal, welches ein Audiosignal mit einer festen Zeitgabe in Bezug zu einem Videosignal davon aufweist, umfassend:
eine erste Einrichtung (6, 7), die auf das TV-Aussendesignal anspricht, zum Detektieren eines Ruhezustands des Audiosignals in dem TV-Aussendesignal zu einer Startzeit oder einer Endzeit des Programms der kommerziellen Nachricht, wobei die erste Einrichtung umfaßt: einen Audiodaten-Herstellungsabschnitt (6), der auf das Audiosignal und ein vertikales Synchronisationssignal des Videosignals anspricht, um Audiodaten des TV-Signals zu erzeugen, und einen Ruhedaten-Herstellungsabschnitt (7), der auf die Audiodaten und das vertikale Synchronisationssignal anspricht, zum Erzeugen von Ruhedaten von dem Audiosignal;
eine zweite Einrichtung (8) zum Detektieren einer wesentlichen Änderung im Bildinhalt von einem Rahmen zu einem nächsten, in dem Videosignal des TV-Aussendesignals;
eine dritte Einrichtung (89), die auf Ausgänge der ersten Einrichtung und der zweiten Einrichtung anspricht, um nur das Programm der kommerziellen Nachricht abzuleiten;
eine vierte Einrichtung (5) zum Erzeugen von Audiodaten des TV-Aussendesignals durch Abtasten des Audiosignals mit einer Zeitgabe des vertikalen Synchronisationssignals; und
eine fünfte Einrichtung (2, 14) zum Entscheiden einer Existenz einer Aussendung eines Programms einer kommerziellen Nachricht in einer Zeitperiode zwischen einem ersten gleichzeitigen Auftreten eines Ruhezustands und einer wesentlichen Änderung im Bildinhalt und einem zweiten gleichzeitigen Auftreten eines Ruhezustands und einer wesentlichen Änderung im Bildinhalt, wenn diese Zeitperiode einer Zeitperiode gleicht, die als eine Aussendezeit für ein Programm einer kommerziellen Nachricht voreingestellt ist, und zum Vergleichen des von der dritten Einrichtung abgeleiteten Programms einer kommerziellen Nachricht mit vorher gespeicherten Daten einer kommerziellen Nachricht, um das Programm der kommerziellen Nachricht (1) zu erkennen.

2. Automatische Erkennungseinrichtung für kommerzielle Nachrichten nach Anspruch 1, dadurch gekennzeichnet, daß die erste Einrichtung einen Audiodaten-Herstellungsabschnitt umfaßt, der auf ein Audiosignal und ein vertikales und horizontale Synchronisationssignale eines Videosignals anspricht, welches in einem TV-Signal enthalten ist, welches zur Erzeugung von Audiodaten des TV-Signals empfangen wird.

3. Automatische Erkennungseinrichtung für kommerzielle Nachrichten nach Anspruch 2, dadurch gekennzeichnet, daß die zweite Einrichtung einen Bildänderungs-Detektorabschnitt umfaßt, der auf das Videosignal, das vertikale Synchronisationssignal und das horizontale Synchronisationssignal anspricht, zum Detektieren einer Änderung eines Bilds auf einem Bildschirm aus dem Videosignal.

4. Automatische Erkennungseinrichtung für kommerzielle Nachrichten nach Anspruch 2, dadurch gekennzeichnet, daß die fünfte Einrichtung einen Steuerabschnitt umfaßt, um einen Start oder ein Ende einer CM zu bestimmen, wenn eine Ausgabe des Ruhedaten-Detektionsabschnitts einen Ruhezustand anzeigt und der Bildänderungs-Detektorabschnitt eine Änderung des Bilds detektiert; und
einen Daten-Referenzabschnitt für kommerzielle Nachrichten, der mit dem Steuerabschnitt zusammenarbeitet, um die Audiodaten in einer Zeitperiode von einem Start zu einem Ende der kommerziellen Nachricht mit vorher gespeicherten Audiodaten der kommerziellen Nachricht zu vergleichen, um eine Übereinstimmung zwischen den Audiodaten und den vorher gespeicherten Audiodaten zu bestimmen.

5. Automatische Erkennungseinrichtung für kommerzielle Nachrichten nach Anspruch 4, ferner umfassend eine manuelle Überprüfungseinrichtung zur Überprüfung einer kommerziellen Nachricht und/oder zur Herstellung von Masterdaten für die kommerzielle Nachricht, wenn der Daten-Referenzabschnitt für kommerzielle Nachrichten keine Übereinstimmung bestimmt.

## Revendications

1. Dispositif de reconnaissance d'un message commercial (CM) automatique destiné à vérifier un programme de message commercial dans un signal de radiodiffusion de télévision qui comporte un signal audio comportant un cadencement fixe par rapport à un signal vidéo de celui-ci, comprenant :
un premier moyen (6, 7) répondant au signal de radiodiffusion de télévision afin de détecter un état de silence du signal audio dans le signal de radiodiffusion de télévision à une heure de début ou à une heure de fin du programme de message commercial, ledit premier moyen comprenant une partie de préparation de données audio (6) répondant au signal audio et un signal de synchronisation verticale du signal vidéo afin de produire des données audio du signal de télévision, et une partie de préparation de données de silence (7) répondant auxdites données audio et au signal de synchronisation verticale afin de produire des données de silence à partir du signal audio,
un second moyen (8) afin de détecter un changement significatif du contenu d'une image d'une trame à une autre, dans le signal vidéo du signal de radiodiffusion de télévision,
un troisième moyen (89) répondant aux sorties dudit premier moyen et dudit second moyen afin d'obtenir uniquement le programme de message commercial,
un quatrième moyen (5) destiné à produire des données audio du signal de radiodiffusion de télévision en échantillonnant le signal audio avec le cadencement du signal de synchronisation verticale, et
un cinquième moyen (2, 14) afin de décider de l'existence d'une radiodiffusion d'un programme de message commercial dans un intervalle de temps entre une première occurrence simultanée d'un état de silence et d'un changement significatif du contenu de l'image et une seconde occurrence simultanée d'un état de silence et d'un changement significatif d'un contenu d'image, lorsque cet intervalle de temps est égal à un intervalle de temps préétabli en tant que durée de radiodiffusion de programme de message commercial et afin de comparer le programme de message commercial obtenu par ledit troisième moyen avec les données de message commercial mémorisées de façon préliminaire afin de reconnaître le programme de message commercial.

2. Dispositif de reconnaissance de message commercial automatique selon la revendication 1, dans lequel ledit premier moyen comprend une partie de préparation de données audio répondant à un signal audio et à des signaux de synchronisation verticale et horizontale d'un signal vidéo contenu dans un signal de télévision reçu afin de produire des données audio du signal de télévision, et

3. Dispositif de reconnaissance de message commercial automatique selon la revendication 2, dans lequel ledit second moyen comprend une partie de détecteur de changement d'image répondant au signal vidéo, au signal de synchronisation verticale et au signal de synchronisation horizontale afin de détecter un changement d'image sur un écran d'image à partir du signal vidéo.

4. Dispositif de reconnaissance de message commercial automatique selon la revendication 2, dans lequel ledit cinquième moyen comprend une partie de commande afin de déterminer un début ou une fin d'un message commercial lorsqu'une sortie de ladite partie de détection de données de silence indique un état de silence et que ladite partie de détecteur de changement d'image détecte un changement d'image, et
une partie de référencement de données de message commercial coopérant avec ladite partie de commande afin de comparer les données audio dans un intervalle de temps depuis un début jusqu'à une fin du message commercial aux données audio mémorisées de façon préliminaire du message commercial afin de déterminer une correspondance entre les données audio et les données audio mémorisées de façon préliminaire.

5. Dispositif de reconnaissance de message commercial automatique selon la revendication 4, comprenant en outre un moyen de vérification manuelle afin de vérifier un message commercial et/ou préparer des données maîtres pour le message commercial lorsque ladite partie de référencement de données de message commercial ne réussit pas à déterminer la correspondance.
